# EUROPEAN PATENT APPLICATION

(11) **EP 3 108 948 A1**
(43) Date of publication of application: **28.12.2016**
(21) Application number: 15174024.8
(22) Date of filing: 26.06.2015
(51) Int. Cl.: B01D 17/06, B03C 11/00, C10G 33/02

(54) **ELECTROSTATIC CROSS-FLOW LIQUID/LIQUID COALESCER**

(71) Applicant: National Oilwell Varco, L.P., Houston, TX 77036 (US)
(72) Inventor: Neuman, Mark, Houston, TX Texas 77096 (US); Ettere, John, South Plainfield, NJ New Jersey 07080 (US)
(74) Representative: Gill Jennings & Every LLP

(57) **Abstract**

According to a first aspect there is provided a coalescer for separating components of an emulsion, said coalescer comprising: a tank; an emulsion inlet to said tank arranged to, in use, introduce a substantially horizontal flow of emulsion into the tank; a first liquid outlet from the tank; a second liquid outlet from the tank which, in use, is above said first liquid outlet; and an electrostatically charged plate which, in use, is angled at an angle θ of greater than 0° and less than 90° to the horizontal and which is located so as to direct liquid coalesced thereon towards the first outlet and not towards said second outlet. According to a second aspect there is provided a method of separating components of an emulsion using such a coalescer.

## Description

The present disclosure relates to separating components of emulsions, for example separating immiscible aqueous droplets from a continuous hydrocarbon phase, e.g. crude oil.

More specifically, a first aspect relates to an electrostatic cross-flow liquid/liquid coalescer and a second aspect relates to a method of using the same.

A well understood problem in the field of crude oil extraction, especially when performed offshore, is that crude oil deposits are often mixed with and/or must be accessed through water. The raw resource recovered thus tends to be an emulsion of aqueous droplets in crude oil. In order to: (i) maximise oil yield, (ii) ensure that the crude oil meets product quality specifications and (iii) ensure waste water expelled into the environment is not contaminated, the aqueous droplets must be separated from the oil, typically using a coalescer.

Coalescers generally fall into three categories. They are used in many contexts including oil and gas production facilities, oil refineries, chemical plants, gas plants and supply/distribution installations.

The simplest are gravity coalescers, or settling tanks. These are simply vessels in which unstable emulsions are allowed to settle out into a denser lower layer and a less dense upper layer so that the layers can be tapped off separately.

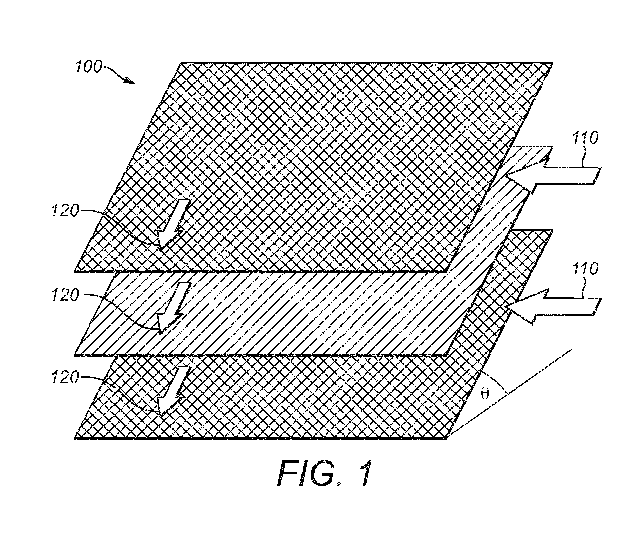

Another type of coalescer is a mechanical coalescer in which coalescence of the dispersed droplet phase of an emulsion is encouraged using physical obstructions to emulsion flow. For example, a dispersed phase denser than the continuous phase may coalesce on a plate angled to the horizontal, and then drip down the slope of the plate towards an outlet. Such plates can be vertically stacked, e.g. as a cross-flow plate pack 100 angled at θ° to the horizontal as illustrated in Figure 1 wherein arrows 110 indicate the substantially horizontal input emulsion flow and 120 the flow of coalesced dispersed phase droplets..

A third type of coalescer is an electrostatic coalescer in which droplets are encouraged to coalesce using an electric field. Since water (especially salt water) is more conductive than oil, when an electric field is applied to the emulsion the droplets form dipoles which attract one another so that the droplets come together and coalesce, accelerating the settling process.

However, all three established types of coalescer require a slow flow of emulsion through a long vessel in order to achieve an acceptable separation. Existing industrial coalescers can take up very large quantities of real estate. This can be a serious problem, especially where space is limited e.g. on an offshore oil rig. A more efficient coalescer is needed so that similar results can be achieved using a shorter tank.

According to a first aspect, there is provided a coalescer for separating components of an emulsion, said coalescer comprising: a tank; an emulsion inlet to said tank arranged to, in use, introduce a substantially horizontal flow of emulsion into the tank; a first liquid outlet from the tank; a second liquid outlet from the tank which, in use, is above said first liquid outlet; an electrostatically charged plate which, in use, is angled at an angle θ of greater than 0° and less than 90° to the horizontal and which is located so as to direct liquid coalesced thereon towards the first outlet and not towards said second outlet; and a grounding baffle coupled to said electrostatically charged plate.

θ could be between 20° and 70° to the horizontal. θ could be between 30° and 60° to the horizontal. θ could be approximately 45° to the horizontal.

Said electrostatically charged plate could be configured to be set at a plurality of angles. This could be done using a locking pivot mechanism.

Said electrostatically charged plate could be substantially planar. Said electrostatically charged plate could be surface treated.

The coalescer could further comprise a gutter providing a liquid conduit from said electrostatically charged plate to the first outlet.

The coalescer could further comprise a high voltage supply connected for charging said electrostatically charged plate. Said voltage supply could be variable.

The coalescer could further comprise one or more additional electrostatically charged plates which, in use, are angled at greater than 0° and less than 90° to the horizontal and which are located so as to direct liquid coalesced thereon towards the first outlet and not towards said second outlet. The coalescer could further comprise an additional grounding baffle coupled to each of said one or more additional electrostatically charged plates.

One or more of said additional plates could be, in use, substantially parallel to said electrostatically charged plate. One or more of said additional plates could be, in use, angled at 180 minus θ° to the horizontal.

Each of said additional plates could be, in use, located at substantially the same location along a flow axis of the tank as said electrostatically charged plate.

The electrostatically charged plate and the additional plates could be arranged such that, when the tank is viewed in cross-section along said flow axis, they form a herringbone pattern. One or more gutters providing liquid conduits from one or more of said electrostatically charged plates to the first outlet could be located around the periphery of the tank.. One or more gutters providing liquid conduits from one or more of said electrostatically charged plates to the first outlet could extend substantially vertically down a central portion of the tank, separating plates angled at θ° to the horizontal from plates angled at 180 minus θ° to the horizontal.

The electrostatically charged plate and the additional plates could be arranged such that, when the tank is viewed in cross-section along said flow axis, they form a chevron pattern. Said chevron pattern, in use, could point substantially vertically upwards, said gutter being located around the periphery of the tank. Alternatively, said chevron pattern, in use, points substantially vertically downwards, said gutter extending substantially vertically down a central portion of the tank, separating plates angled at θ° to the horizontal from plates angled at 180 minus θ° to the horizontal.

The coalescer could further comprise one or two perforated baffle plates located between said inlet and said electrostatically charged plate.

The first outlet could be, in use, located above a base of the tank.

The coalescer could further comprise a solids collection pad located on a base of the tank. Said pad could comprise one or more cyclonic sand fluidization devices.

The coalescer could further comprise a heater located between said inlet and said first and second outlets. Said heater could be a fire-tube. The coalescer could further comprise a temperature sensor arranged to sense the temperature of liquid in the tank. The coalescer could further comprise a controller configured to, in response to receiving data from said temperature sensor indicating that the liquid temperature is outside of predetermined lower and upper bounds, control said heater to adjust the temperature to within said bounds

The tank could have a diameter of between 7' and 17'. The tank could have a diameter of approximately 8'.

The coalescer could further comprise a pump configured to force liquid from said inlet towards the outlets. Said pump could, in use, induce a substantially horizontal liquid flow.

According to a second aspect there is provided a method of separating components of an emulsion, said method comprising impinging a substantially horizontal flow of said emulsion onto an electrostatically charged plate angled at an angle θ of greater than 0° and less than 90° to the horizontal, said plate being located so as to direct liquid coalesced thereon towards a first liquid outlet and not towards a second liquid outlet above said first outlet and being coupled to a grounding baffle.

Aspects of the present invention will now be described by way of example with reference to the accompanying figures. In the figures:
Figure 1 illustrates the operation of an example cross-flow plate pack;
Figure 2A is a schematic of an example coalescer;
Figure 2B illustrates an example baffle plate;
Figure 2C illustrates an example plate pack arrangement; and
Figure 3 is a flow chart of an example method of separating components of an emulsion.

The following description is presented to enable any person skilled in the art to make and use the system, and is provided in the context of a particular application. Various modifications to the disclosed embodiments will be readily apparent to those skilled in the art.

According to the present disclosure, there is provided a compact and rapid coalescer. A substantially horizontal flow of emulsion is obstructed by one or more electrostatically charged plates, angled with respect to the horizontal, so that droplets of the dispersed phase are attracted to the plate(s) where they coalesce and then run down the plate(s) towards an outlet.

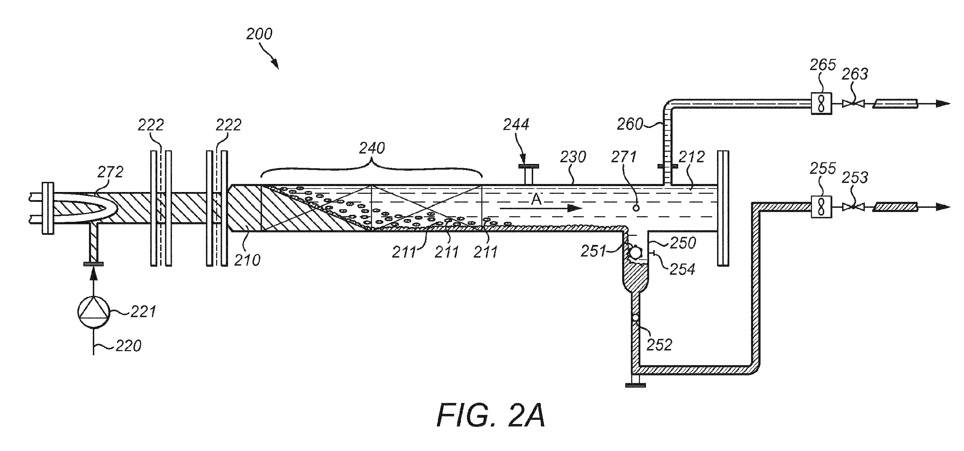

Figure 2A shows a side-on cross-sectional view of an example coalescer 200.

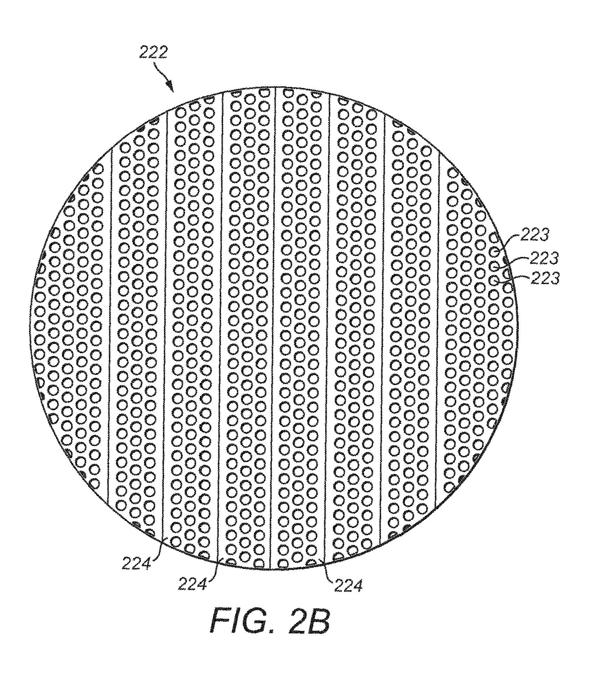

Emulsion 210 enters the coalescer at inlet 220, optionally assisted by a pump 221. A substantially horizontal flow of emulsion along flow axis A is thus started through tank 230. One or more calming baffles 222 are optionally provided to encourage laminar flow/reduce turbulence. These can for example be formed of double perforated plates. They could be made of stainless steel, e.g. 316 grade. Example dimensions could be approximately 2.4 m overall diameter (i.e. spanning substantially the full tank cross-section) with approximately 50 mm diameter perforations 223 at a pitch of approximately 70 mm. The baffle plates could be formed of strips 224 (for ease of transport into the tank), assembled inside the tank as shown in Figure 2B.

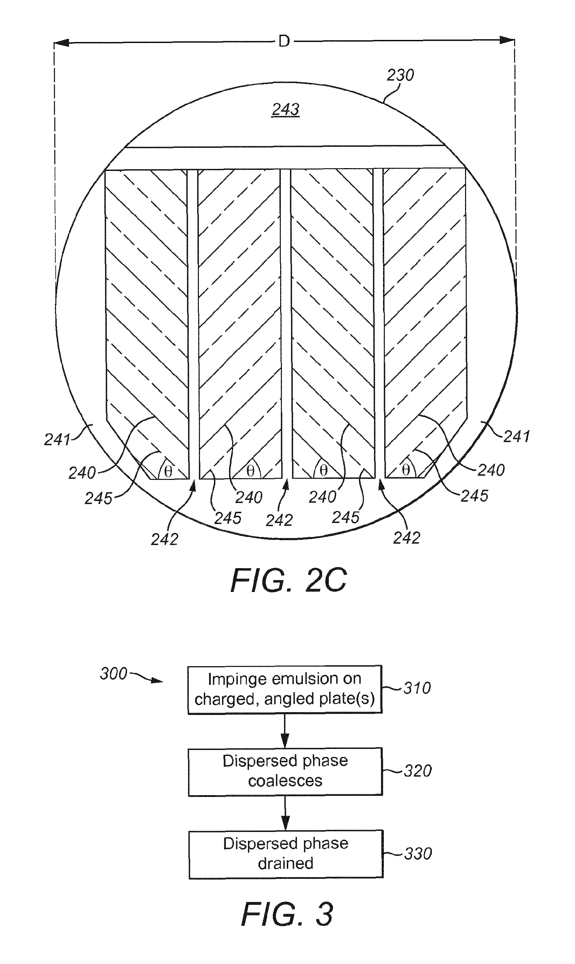

The emulsion flow then impinges on plates 240 (an example arrangement of which is illustrated in Figure 2C). Plates 240 may be substantially planar and/or surface treated e.g. texturised or embossed.

Figure 2C shows an end-on cross-sectional view of the example coalescer of Figure 2A in the electrified plates section. Such an arrangement of plates could for example be used in tanks of greater than 36" diameter.

Four stacks of plates 240 are provided side-by-side so that they slope down to the periphery of tank 230 alternately at angles of θ° and (180-θ)° to the horizontal. The plates thus resemble chevron herringbone pattern in this view. Alternatively, the plates angled at θ° to the horizontal could be angled at (180-θ)° to the horizontal and vice-versa. As another option, two stacks of plates could be used, respectively angled at θ° and (180-θ)° to the horizontal, resembling an upward or downward-pointing chevron pattern.

The angle θ of plates 240 to the horizontal can be selected according to the relative densities of the particular emulsion components to be separated and any sediment or other solid matter anticipated to be entrained in the emulsion flow. This enables efficient use of the tank volume, resulting in a more compact tank to achieve the same result. A mechanism may optionally be provided to vary the angle θ according to the current flow composition. For example a lockable pivot could be used to set θ. θ might be approximately 45°, or approximately 60°.

The plates 240 are optionally sized to fit through the tank 230's man-way. This enables easier retrofitting into existing tanks and removal for cleaning/servicing and/or replacement.

The tank diameter D might typically be approximately 8'.

Gutters 241 are provided around the lower periphery of tank 230 for transport of coalesced water. Vertical gutters 242 down the centre of the tank 230 may also optionally be provided. Further vertical gutters could also be provided spread across the tank's cross-section, for example approximately every 15".

Some headroom 243 may be provided above plates 240 to allow any gas to collect. A gas tap valve (not shown) could optionally be provided in the top of the tank 230 to release excess gas pressure.

Plates 240 are coupled to high voltage supply 244 so that they are electrostatically charged. (Each plate is also coupled to a respective grounding baffle 245.) The particular voltage used can be chosen according to the plate spacing and the composition of the emulsion, e.g. the identity of the components and the droplet size. The voltage could for example be from about 0.5V to 40kV, e.g. from about 5 to about 30 kV. Such a voltage might be suitable for e.g. an 8" plate spacing. Smaller plate spacings, e.g. approximately 1" to 2", require lower voltages, e.g. less than 10 kV. The voltage supply may be variable so that the electric field can be dynamically adjusted. A grounding float (not shown) may optionally be provided to prevent overheating if the liquid level falls below the top of the plates 240.

Water droplets 211 coalesce on plates 240, and run down towards water outlet 250.

Between plates 240 and water outlet 250 a settling section is optionally provided to increase residence time. The longer the settling section the greater the separation of emulsion components from one another and from any solid material entrained in the emulsion flow achieved, but the length of the settling section may be limited due to size constraints. (More compact apparatus may be preferred for example on offshore oil platforms.)

A solids collection pad (not shown) is optionally provided on the base of the tank in the settling section. It may for example comprise cyclonic sand fluidization devices, such as Tore® online vessel desanders (OVDs), to remove any solid material, e.g. sediment, which has settled towards the bottom of the tank. The Tore is a highly effective solids fluidisation device that can operate even when completely buried in sand. It operates by generating a vortex below the Tore which fluidizes the sand in this area. The vortex is created by introducing fluid through a feed inlet tangentially into a swirl chamber. This establishes a swirling motion which passes through the annulus between a Tore discharge tube and outer tube, and over the foot of the Tore. When fluidised, the sand is drawn by the central core of the vortex towards the discharge tube, allowing for controlled transportation. The fluidising effect created by the Tore is localised, with no disruptive effect on a vessel's liquid interfaces.

Avoiding build-up of sand and other sediment in the tank is important if the emulsion comprises water since shorting can occur if the separated water level reaches up to the level of the electrified plates due to displacement of water by sediment.

Water outlet 250 is illustrated as a drain in the base of the tank 230. It could alternatively be provided as a low level tap in the distal end of the tank 230, slightly above the base of the tank, to prevent any sediment or other solid material which settles onto the base of the tank from contaminating the waste water collected at outlet 250. (This feature could be provided alternatively or additionally to a solids collection pad.) Other channels or gutters could alternatively or additionally be used as outlets.

High level sight port 251 and low level sight port 252 are provided to allow the oil/water interface level to be monitored. Generally, it should not be visible through either port. If it is, then e.g. a globe valve 253 can be adjusted to correct the interface level.

interface level control could alternatively be operated automatically. Instead of or in addition to sight ports 251 and 252, an interface level probe could be provided. Such a probe could feed interface level data to a controller configured to control e.g. globe valve 253 to correct the interface level. Such a probe could for example measure one or more of capacitance, impedance and microwave absorption to indicate the interface level.

A pluggable rag layer drain 254 is provided just above the high level sight port. Rag/crud layers made up of oil/water emulsion, particulate, and surface active agents tend to accumulate at the oil/water interface. When such a layer is observed it should be drained since water droplets have difficulty sinking through it and oil droplets have trouble rising through it.

Oil 212 is collected at oil outlet 260, illustrated as a high level tap.

One or both outlets may optionally comprise flow gauges 255/265 (e.g. turbine meters) to monitor the coalescence progress. One or both outlets may optionally comprise stop valves 253/263 (e.g. globe valves) to throttle and/or halt collection of water and/or oil, e.g. so the coalescer can be cleaned or a full collection vessel replaced.

A temperature gauge 271 may optionally be provided to monitor the temperature in the tank. The viscosity of some emulsion components, including crude oil, varies significantly with temperature. If the continuous phase is too viscous, the dispersed phase droplets will not settle out quickly enough. A heater 272, for example a fire-tube or immersion heater optionally controlled by a controller (not shown) to keep the temperature measured by gauge 271 between suitable upper and lower limits, is optionally provided to prevent this. Such a heater could be arranged to heat the emulsion as it enters the tank through the inlet. Suitable upper and lower bounds could respectively be 250°F and 50°F, or 180°F and 120°F.

Figure 3 is a flow chart of an example coalescence procedure 300. At 310, a substantially horizontal emulsion flow is impinged onto an electrostatically charged plate angled at an angle θ of greater than 0° and less than 90° to the horizontal. At 320, a dispersed phase of the emulsion coalesces on said plate. At 330, the coalesced liquid flows down said plate towards a first liquid outlet and not towards a second liquid outlet above said first outlet.

The electrostatic cross-flow liquid/liquid coalescer combines gravity, mechanical devices and electrical fields to enhance and accelerate separation down to dispersed phase droplet sizes of less than 10 µm at a much higher rate than any currently available process. By electrifying cross-flow plates, coalescence is accelerated over a wider range of droplets, reducing required tank size, while increasing efficiency. The electric field gives rise to attractive forces between water droplets and increases the probability of coalescence at the close contact surfaces introduced. By promoting coalescence of small water droplets that can utilise mechanical surfaces in close proximity (in the electric field) the settling rate and drainage rates are greatly increased over that experienced using electrostatic/gravity or mechanical/gravity processes alone. The water content can be reduced to less than 0.5 vol% in a final treatment stage.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

## Claims

1. A coalescer for separating components of an emulsion, said coalescer comprising:
a tank;
an emulsion inlet to said tank arranged to, in use, introduce a substantially horizontal flow of emulsion into the tank;
a first liquid outlet from the tank;
a second liquid outlet from the tank which, in use, is above said first liquid outlet;
an electrostatically charged plate which, in use, is angled at an angle θ of greater than 0° and less than 90° to the horizontal and which is located so as to direct liquid coalesced thereon towards the first outlet and not towards said second outlet; and
a grounding baffle coupled to said electrostatically charged plate.

2. The coalescer of claim 1, wherein:
θ is between 20° and 70° to the horizontal, optionally between 30° and 60°, optionally approximately 45°; and/or
said electrostatically charged plate is configured to be set at a plurality of angles, optionally using a locking pivot mechanism.

3. The coalescer of either of claims 1 or 2, wherein said electrostatically charged plate is substantially planar and/or surface treated.

4. The coalescer of any of claims 1 to 3, further comprising a gutter providing a liquid conduit from said electrostatically charged plate to the first outlet.

5. The coalescer of any preceding claim, further comprising a high voltage supply connected for charging said electrostatically charged plate, said voltage supply optionally being variable.

6. The coalescer of any preceding claim, further comprising:
one or more additional electrostatically charged plates which, in use, are angled at greater than 0° and less than 90° to the horizontal and which are located so as to direct liquid coalesced thereon towards the first outlet and not towards said second outlet; and
an additional grounding baffle coupled to each of said one or more additional electrostatically charged plates.

7. The coalescer of claim 6, wherein:
one or more of said additional plates are, in use, substantially parallel to said electrostatically charged plate of claim 1; and/or
one or more of said additional plates are, in use, angled at 180 minus θ° to the horizontal.

8. The coalescer of either of claims 6 or 7, wherein each of said additional plates is, in use, located at substantially the same location along a flow axis of the tank as said electrostatically charged plate of claim 1.

9. The coalescer of claim 8 as dependent on the additional variant of claim 7 as dependent on claim 4, wherein:
the electrostatically charged plate of claim 1 and the additional plates are arranged such that, when the tank is viewed in cross-section along said flow axis, they form a herringbone pattern; and
one or more gutters providing liquid conduits from one or more of said electrostatically charged plates to the first outlet are located around the periphery of the tank and/or extend substantially vertically down a central portion of the tank, separating plates angled at θ° to the horizontal from plates angled at 180 minus θ° to the horizontal.

10. The coalescer of any preceding claim, further comprising one or two perforated baffle plates located between said inlet and said electrostatically charged plate.

11. The coalescer of any preceding claim, wherein the first outlet is, in use, located above a base of the tank.

12. The coalescer of any preceding claim, further comprising a solids collection pad located on a base of the tank, said pad optionally comprising one or more cyclonic sand fluidization devices.

13. The coalescer of any preceding claim, further comprising:
a heater located between said inlet and said first and second outlets, optionally being a fire-tube;
a temperature sensor arranged to sense the temperature of liquid in the tank; and
a controller configured to, in response to receiving data from said temperature sensor indicating that the liquid temperature is outside of predetermined lower and upper bounds, control said heater to adjust the temperature to within said bounds.

14. The coalescer of any preceding claim, further comprising a pump configured to force liquid from said inlet towards the outlets, said pump optionally, in use, inducing a substantially horizontal liquid flow.

15. A method of separating components of an emulsion, said method comprising impinging a substantially horizontal flow of said emulsion onto an electrostatically charged plate angled at an angle θ of greater than 0° and less than 90° to the horizontal, said plate being located so as to direct liquid coalesced thereon towards a first liquid outlet and not towards a second liquid outlet above said first outlet and being coupled to a grounding baffle.
